# EUROPÄISCHE PATENTSCHRIFT

(11) **EP 0 446 703 B1**
(45) Veröffentlichungstag und Bekanntmachung des Hinweises auf die Patenterteilung: **18.01.1995**
(21) Anmeldenummer: 91102862.9
(22) Anmeldetag: 27.02.1991
(51) Int. Cl.: C07F 7/22

(54) **Verfahren zur Herstellung von Dialkylzinndichloriden**
Process for the preparation of dialkyl tin dichlorides
Procédé de préparation de dichlorures d'étain dialkyliques

(30) Priorität: 12.03.1990 DE 4007745
(43) Veröffentlichungstag der Anmeldung: 18.09.1991
(73) Patentinhaber: Th. Goldschmidt AG, 45127 Essen (DE)
(72) Erfinder: Ruf, Erich, Dr., W-4300 Essen (DE)

(56) Entgegenhaltungen:
- DE-C- 1 157 617
- CHEMICAL ABSTRACTS, vol. 78, no. 7, 19. Februar 1973, Columbus,Ohio, US; abstract no. 43633M, L.S. MELNICHENKO ET AL.: 'Redistribution ofradicals and functional groups in acyl (acyloxy) derivatives of tin' Seite 507;Spalte 2 ;

## Beschreibung

Die Erfindung betrifft ein Verfahren zur Herstellung von Dialkylzinndichloriden, deren Alkylgruppen jeweils 1 bis 22 Kohlenstoffatome aufweisen.

Zur Herstellung von Dialkylzinndichloriden sind nach dem Stand der Technik im wesentlichen zwei Verfahren bekannt. Es handelt sich dabei um das Grignard- und das Alkylaluminium-Verfahren.

Beiden Verfahren ist gemeinsam, daß zunächst in einer ersten Verfahrensstufe Tetraalkylzinn hergestellt wird, aus welchem dann in einer zweiten Verfahrensstufe durch Komproportionierung von Tetraalkylzinn mit Zinn(IV)-chlorid Alkylzinnchloride hergestellt werden.

Der Stand der Technik wird durch nachstehende Gleichungen formelmäßig beschrieben:

### 1. Verfahrensstufe

a) Grignard-Verfahren

   4 Mg + 4 R-Cl + SnCl₄→R₄Sn + 4 MgCl₂
b) Alkylaluminium-Verfahren

   4 R₃Al + 3 SnCl₄ + 4 R₂O→3 R₄Sn + 4 AlCl₃ . R₂O

### 2. Verfahrensstufe

R₄Sn + SnCl₄→2 R₂SnCl₂

Die hier als Beispiel gezeigte Komproportionierung von einem Mol Tetraalkylzinn mit einem Mol Zinn(IV)-chlorid führt in der Praxis zu einem Gemisch von Alkylzinnchloriden, aus dem die einzelnen Alkylzinnchloride durch fraktionierte Destillation gewonnen werden.

Beide Verfahrensstufen erfolgen bei hohen Temperaturen, wobei bei dem Grignard-Verfahren die Anwesenheit von Lösungsmitteln und bei dem Alkylaluminium-Verfahren die Anwesenheit von Komplexbildnern, wie z. B. Dibutylether, für die erforderliche Komplexbindung des bei der Reaktion entstehenden Aluminiumchlorids erforderlich ist.

Der Erfindung liegt die Aufgabe zugrunde, Dialkylzinndichloride in glatter einstufiger Reaktion bei niedrigen Temperaturen herzustellen.

Überraschenderweise gelingt dies erfindungsgemäß dadurch, daß man Trialkylaluminium langsam zu einer Lösung von Zinndiacetatdichlorid in Tetrahydrofuran im Molverhältnis von etwa 2 : 3 zugibt, das im Verlauf der Umsetzung ausfallende Aluminiumtriacetat abfiltriert und das als Lösungsmittel verwendete Tetrahydrofuran abdestilliert.

Die Alkylgruppen des als Ausgangsverbindung verwendeten Trialkylaluminiums sind lineare oder verzweigte Alkylgruppen und weisen jeweils 1 bis 22 Kohlenstoffatome auf. Bevorzugt sind lineare Alkylreste und darüber hinaus Trialkylaluminiumverbindungen, bei denen die drei Alkylgruppen einander gleich sind. Beispiele geeigneter Alkylgruppen sind die Methyl-, Ethyl-, Propyl-, i-Propyl-, Butyl-, i-Butyl-, Octyl-, Ethylhexyl-, Decyl-, Stearyl- und Behenylgruppe.

Bei diesem erfindungsgemäßen Verfahren der partiellen Alkylierung von Zinndiacetatdichlorid mit Trialkylaluminium werden nur die Acetatgruppen alkyliert unter gleichzeitiger Bildung von Aluminiumtriacetat entsprechend der Gleichung: 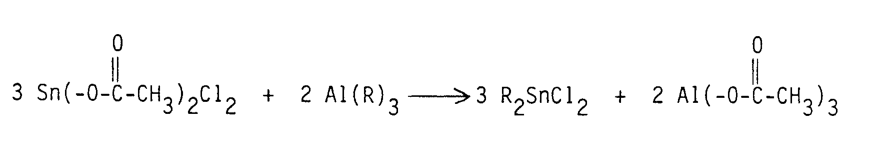
Eine bevorzugte Ausführungsform des erfindungsgemäßen Verfahrens ist dadurch gekennzeichnet, daß das Reaktionsgemisch während der Zugabe des Trialkylaluminiums eine Temperatur von etwa 5 bis 60°C aufweist. Vorzugsweise weist das Reaktionsgemisch während der Zugabe des Trialkylaluminiums eine Temperatur von etwa 10 bis 40°C auf. Da die Reaktion exotherm verläuft, muß das Reaktiongsgemisch im allgemeinen gekühlt werden.

Bei Ersatz von Tetrahydrofuran durch andere Lösungsmittel bzw. flüssige Kohlenwasserstoffe, wie z. B. Diethylether, Dibutylether, Mono- und Diglyme sowie Toluol, erfolgt die partielle Alkylierung nicht so eindeutig und es entstehen größere Mengen an Nebenprodukten.

Das erfindungsgemäße Verfahren hat somit wesentliche Vorteile gegenüber dem bisherigen Stand der Technik; da es ein Direktverfahren darstellt, ist somit die vorherige Herstellung von Tetraalkylzinn und nachfolgende Komproportionierung von Tetraalkylzinn mit Zinn(IV)-chlorid nicht erforderlich.

Die erhaltenen Dialkylzinndichloride eignen sich zur Vergütung von Glasoberflächen und als Zwischenprodukte zur Herstellung zinnorganischer Verbindungen. Das als Nebenprodukt gebildete Aluminiumtriacetat ist ein wertvoller Katalysator für Veresterungen, Umesterungen und Polykondensationen.

Das erfindungsgemäße Verfahren wird durch nachstehende Beispiele näher erläutert:

### Beispiel 1

In einen 250-ml-Vierhalskolben mit Rührer, Tropftrichter, Kühler mit Argonzufuhr und Thermometer werden 61,6 g Zinndiacetatdichlorid und 92 g Tetrahydrofuran gegeben.

Durch Rühren der Produktmischung wird innerhalb von 10 Minuten eine klare Lösung erhalten. Zu der so erhaltenen Lösung werden 26,4 g (stöchiometrische Menge) Triisobutylaluminium tropfenweise unter Rühren derart zugegeben, daß die Temperatur der Produktmischung auf ca. 30°C gehalten wird.
Eintropfzeit: ca. 25 Minuten
Hierbei fällt Aluminiumtriacetat aus, das über eine evakuierbare Fritte abfiltriert und viermal mit jeweils ca. 100 ml Tetrahydrofuran gewaschen wird. Das so gewaschene Aluminiumtriacetat wird in der Fritte im Vakuum (1 bis 3 mbar) bei Raumtemperatur getrocknet. Es werden 27,2 g Aluminiumtriacetat erhalten.

Die gesamte Waschflüssigkeit wird mit dem Filtrat vereinigt. Die so erhaltene klare Lösung wird im Wasserstrahlvakuum (ca. 18 mbar) einer Destillation unterworfen, wobei Tetrahydrofuran abdestilliert wird.

Im Anschluß daran wird das vorliegende Diisobutylzinndichlorid im Ölpumpenvakuum (1 bis 3 mbar) destilliert.

Die Ausbeute, bezogen auf das destillierte Produkt, beträgt 51,6 g Diisobutylzinndichlorid.

### Beispiel 2

In einen 250-ml-Vierhalskolben mit Rührer, Tropftrichter, Kühler mit Argonzufuhr und Thermometer werden 61,5 g Zinndiacetatdichlorid und 92,2 g Tetrahydrofuran gegeben.

Durch Rühren der Produktmischung wird innerhalb 10 Minuten eine klare Lösung erhalten. Zu dieser Lösung werden unter Kühlung tropfenweise 51,3 g Trioctylaluminium (5 % Überschuß) gegeben.
Eintropfzeit: ca. 1 Stunde
Hierbei fällt Aluminiumtriacetat aus, das über eine evakuierbare Fritte abfiltriert und viermal mit jeweils ca. 100 ml Tetrahydrofuran gewaschen wird. Das so gewaschene Aluminiumtriacetat wird in der Fritte im Vakuum (1 bis 3 mbar) bei Raumtemperatur getrocknet. Es werden 26,3 g Aluminiumtriacetat erhalten.

Die gesamte Waschflüssigkeit wird mit dem Filtrat vereinigt. Die so erhaltene Lösung wird im Wasserstrahlvakuum (ca. 18 mbar) destilliert, wobei Tetrahydrofuran abgezogen wird. Im Anschluß daran wird eine Destillation im Ölpumpenvakuum (1 bis 3 mbar) vorgenommen. Hierbei wird ein Destillationsvorlauf von 4,1 g bei einer Destillationstemperatur von ca. 136°C und 75,9 g Destillationshauptmenge bei einer Temperatur von 149 bis 153°C erhalten.

Die Vordestillatmenge besteht je zur Hälfte aus Monooctylzinntrichlorid und Dioctylzinndichlorid. Die Hauptdestillatmenge besteht aus Dioctylzinndichlorid.

Die Ausbeute beträgt: 2,05 g Monooctylzinntrichlorid und 77,95 g Dioctylzinndichlorid.

### Beispiel 3

In einen 250-ml-Vierhalskolben mit Rührer, Tropftrichter, Kühler mit Argonzufuhr und Thermometer werden 61,5 g Zinndiacetatdichlorid und 92,2 g Tetrahydrofuran gegeben.

Durch Rühren der Produktmischung wird innerhalb 10 Minuten eine klare Lösung erhalten.

Zu dieser Lösung werden 74,9 g Tridodecylaluminium tropfenweise unter Rühren derart zugegeben, daß die Temperatur der Reaktionsmischung ca. 40°C beträgt. Hierbei fällt Aluminiumtriacetat aus. Das ausgefallene Aluminiumtriacetat wird bei 50°C über eine evakuierbare Fritte abfiltriert und anschließend viermal mit je ca. 100 ml ca. 50°C warmen Tetrahydrofuran gewaschen. Das so erhaltene Aluminiumtriacetat wird in der Fritte im Vakuum (1 bis 3 mbar) bei Raumtemperatur getrocknet. Es werden 28,5 g Aluminiumtriacetat erhalten.

Die erhaltene Waschflüssigkeit wird mit dem Filtrat vereinigt. Tetrahydrofuran wird im Wasserstrahlvakuum (ca. 18 mbar) abdestilliert. Im Anschluß daran wird das entstandene Didodecylzinndichlorid im Ölpumpenvakuum (< 1 mbar / Kp: ca. 220°C) destilliert.
Ausbeute: 99,6 g Didodecylzinndichlorid.

## Patentansprüche

1. Verfahren zur Herstellung von Dialkylzinndichloriden, deren Alkylgruppen jeweils 1 bis 22 Kohlenstoffatome aufweisen, dadurch gekennzeichnet, daß man Trialkylaluminium langsam zu einer Lösung von Zinndiacetatdichlorid in Tetrahydrofuran im Molverhältnis von etwa 2 : 3 zugibt, das im Verlauf der Umsetzung ausfallende Aluminiumtriacetat abfiltriert und das als Lösungsmittel verwendete Tetrahydrofuran abdestilliert.

2. Verfahren nach Anspruch 1, dadurch gekennzeichnet, daß das Reaktionsgemisch während der Zugabe des Trialkylaluminiums eine Temperatur von etwa 5 bis 60°C aufweist.

3. Verfahren nach Anspruch 2, dadurch gekennzeichnet, daß das Reaktionsgemisch während der Zugabe des Trialkylaluminiums eine Temperatur von etwa 10 bis 40°C aufweist.

## Claims

1. Process for the preparation of dialkyltin dichlorides, the alkyl groups of which each have 1 to 22 carbon atoms, characterized in that trialkylaluminium is slowly added to a solution of tin diacetate dichloride in tetrahydrofuran in a molar ratio of about 2 : 3, the aluminium triacetate precipitating out in the course of the reaction is filtered off and the tetrahydrofuran used as solvent is distilled off.

2. Process according to Claim 1, characterized in that the reaction mixture has a temperature from about 5 to 60°C during the addition of the trialkylaluminium.

3. Process according to Claim 2, characterized in that the reaction mixture has a temperature from about 10 to 40°C during the addition of the trialkylaluminium.

## Revendications

1. Procédé de préparation de dichlorures de dialkylétain dont les groupes alkyles comportent chacun de 1 à 22 atomes de carbone, caractérisé en ce qu'on ajoute lentement du trialkylaluminium à une solution de dichlorurediacétate d'étain dans du tétrahydrofuranne à un rapport molaire d'environ 2:3, on sépare par filtration le triacétate d'aluminium précipité pendant le déroulement de la réaction et on chasse par distillation le tétrahydrofuranne utilisé comme solvant.

2. Procédé selon la revendication 1, caractérisé en ce que le mélange de réaction présente une température d'environ 5 à 60°C pendant l'addition du trialkylaluminium.

3. Procédé selon la revendication 2, caractérisé en ce que le mélange de réaction présente une température d'environ 10 à 40°C pendant l'addition du trialkylaluminium.
